# EUROPEAN PATENT APPLICATION

(11) **EP 3 515 001 A1**
(43) Date of publication of application: **24.07.2019**
(21) Application number: 17850961.8
(22) Date of filing: 14.09.2017
(51) Int. Cl.: H04L 1/18, H04L 29/08, H04W 28/04

(54) **USER TERMINAL AND WIRELESS COMMUNICATION METHOD**

(30) Priority: 16.09.2016 JP 2016182134
(71) Applicant: NTT DOCOMO, INC., Chiyoda-ku Tokyo 100-6150 (JP)
(72) Inventor: TAKEDA, Kazuki, Tokyo 100-6150 (JP); YASUKAWA, Shinpei, Tokyo 100-6150 (JP); NAGATA, Satoshi, Tokyo 100-6150 (JP); WANG, Lihui, Beijing 100190 (CN)
(74) Representative: Hoffmann Eitle
(86) International application number: PCT/JP2017/033206
(87) International publication number: WO 2018/052060

(57) **Abstract**

The present invention is designed so that data can be decoded suitably even when multiple transmission time interval lengths are used in one carrier. According to one aspect of the present invention, a user terminal has a receiving section that receives a DL signal in a second transmission time interval (TTI) having a longer TTI length than a first TTI, and a control section that saves soft bits of the received DL signal, and controls a decoding process using the saved soft bits and a retransmitted DL signal, and, when a DL signal that is transmitted in the first TTI is scheduled in a resource allocated to the DL signal transmitted in the second TTI, the control section controls the decoding process without using a soft bit corresponding to the DL signal that is transmitted in the first TTI.

## Description

### Technical Field

The present invention relates to a user terminal and a radio communication method in next-generation mobile communication systems.

### Background Art

In the UMTS (Universal Mobile Telecommunications System) network, the specifications of long term evolution (LTE) have been drafted for the purpose of further increasing high speed data rates, providing lower latency and so on (see non-patent literature 1). Also, the specifications of LTE-A (also referred to as "LTE-advanced," "LTE Rel. 10," "LTE Rel. 11," or "LTE Rel. 12") have been drafted for further broadbandization and increased speed beyond LTE (also referred to as "LTE Rel. 8" or "LTE Rel. 9"), and successor systems of LTE (also referred to as, for example, "FRA (Future Radio Access)," "5G (5th generation mobile communication system)," "5G+ (plus)," "NR (New Radio)," "NX (New radio access)," "New RAT (Radio Access Technology)," "FX (Future generation radio access)," "LTE Rel. 13," "LTE Rel. 14," "LTE Rel. 15" or later versions) are under study.

Carrier aggregation (CA) to integrate multiple component carriers (CC) is introduced in LTE Rel. 10/11 in order to achieve broadbandization. Each CC is configured with the system band of LTE Rel. 8 as one unit. Furthermore, in CA, a plurality of CCs of the same radio base station (referred to as an "eNB (evolved Node B)," a "BS (Base Station)" and so on) are configured in a user terminal (UE (User Equipment)).

Meanwhile, in LTE Rel. 12, dual connectivity (DC), in which multiple cell groups (CGs) formed by different radio base stations are configured in UE, is also introduced. Each cell group is comprised of at least one cell (CC). Since multiple CCs of different radio base stations are integrated in DC, DC is also referred to as "inter-eNB CA."

Also, in LTE Rel. 8 to 12, frequency division duplex (FDD), in which downlink (DL) transmission and uplink (UL) transmission are made in different frequency bands, and time division duplex (TDD), in which DL transmission and UL transmission are switched over time and made in the same frequency band, are introduced.

Also, in LTE Rel. 8 to 12, HARQ (Hybrid Automatic Repeat reQuest)-based data retransmission control is used. UE and/or a base station receive delivery acknowledgment information (also referred to as "HARQ-ACK," "ACK/NACK," and so on) in response to transmitted data, and judge whether or not the data is to be retransmitted, based on this information.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"

### Summary of Invention

### Technical Problem

Future radio communication systems (for example, 5G, NR, etc.) are expected to realize various radio communication services by fulfilling mutually varying requirements (for example, ultra high speed, large capacity, ultra-low latency, etc.)

For example, for 5G, research is underway to provide radio communication services, referred to as "eMBB (enhanced Mobile Broad Band)," "IoT (Internet of Things)," "MTC (Machine Type Communication)," "M2M (Machine To Machine)," "URLLC (Ultra Reliable and Low Latency Communications)" and so on. Note that M2M may be referred to as "D2D (Device To Device)," "V2V (Vehicle To Vehicle)" and so on, depending on what communication device is used.

Envisaging future radio communication systems, studies are in progress to allow UE to transmit and/or receive signals by using multiple lengths of transmission time intervals (TTIs) in one carrier. However, when data is transmitted in varying TTI lengths, conventional HARQ control does not work effectively, and there is a possibility that data decoding tends to fail. Furthermore, communication throughput and/or the like might drop.

The present invention has been made in view of the above, and it is therefore an object of the present invention to provide a user terminal and a radio communication method, whereby data can be decoded suitably even when a number of TTI lengths are used in one carrier.

### Solution to Problem

According to one aspect of the present invention, a user terminal has a receiving section that receives a DL signal in a second transmission time interval (TTI) having a longer TTI length than a first TTI, and a control section that saves soft bits of the received DL signal, and controls a decoding process using the saved soft bits and a retransmitted DL signal, and, in this user terminal, when a DL signal that is transmitted in the first TTI is scheduled in a resource allocated to the DL signal transmitted in the second TTI, the control section controls the decoding process without using a soft bit corresponding to the DL signal that is transmitted in the first TTI.

### Advantageous Effects of Invention

According to the present invention, data can be decoded suitably even when a number of TTI lengths are used in one carrier.

### Brief Description of Drawings

FIG. 1 is a diagram to show an example in which a long TTI and short TTIs co-exist;
FIG. 2 is a diagram to show an example of long TTI and short TTI scheduling timings and periods;
FIG. 3 is a diagram to show an example in which short TTIs interrupt a long TTI;
FIG. 4 is a diagram to explain a failure of HARQ retransmission of punctured long TTI data;
FIG. 5 is a diagram to show an example of HARQ combining according to embodiment 1.1 of the present invention;
FIG. 6 is a diagram to show an example of HARQ combining according to embodiment 1.2 of the present invention;
FIG. 7 is a diagram to show a variation of HARQ combining according to embodiment 1.1;
FIG. 8 is a diagram to show a variation of HARQ combining according to embodiment 1.2;
FIG. 9 is a diagram to show a variation 2 of HARQ combining according to embodiment 1.1;
FIG. 10 is a diagram to show a variation 3 of HARQ combining according to embodiment 1.1;
FIG. 11 is a diagram to show an example in which a long TTI and short TTIs are transmitted to different UEs;
FIG. 12 is a diagram to show an example of how DCI specifies resources, according to a second embodiment of the present invention;
FIG. 13 is a diagram to show an example of UE operation according to the second embodiment;
FIG. 14 is a diagram to show an exemplary schematic structure of a radio communication system according to one embodiment of the present invention;
FIG. 15 is a diagram to show an exemplary overall structure of a radio base station according to one embodiment of the present invention;
FIG. 16 is a diagram to show an exemplary functional structure of a radio base station according to one embodiment of the present invention;
FIG. 17 is a diagram to show an exemplary overall structure of a user terminal according to one embodiment of the present invention;
FIG. 18 is a diagram to show an exemplary functional structure of a user terminal according to one embodiment of the present invention; and
FIG. 19 is a diagram to show an exemplary hardware structure of a radio base station and a user terminal according to one embodiment of the present invention.

### Description of Embodiments

As one method of reducing communication latency in LTE, it may be possible to control transmission and/or receipt of signals by introducing shortened TTIs, which are shorter in duration than existing subframes (1 ms). Also, for 5G/NR, studies are in progress on how to allow UE to use different services simultaneously. In this case, the length of TTIs may be changed depending on services.

Note that a "TTI" as used herein refers to a time unit in which transmitting/receiving data's transport block, code block and/or codeword are transmitted and received. Given a TTI, the period of time (for example, the number of symbols) where a data transport block, code block and/or codeword are actually mapped may be shorter than the TTI.

For example, when a TTI is formed with a predetermined number of symbols (for example, fourteen symbols), transmitting/receiving data's transport block, code block, codeword and so forth can be transmitted and received in one or a predetermined number of symbol periods among these symbols. If the number of symbols in which the transport block, code block and/or codeword of transmitting/receiving data are transmitted/received is smaller than the number of symbols constituting a TTI, reference signals, control signals and/or others can be mapped to the symbols in the TTI where no data is mapped.

Now, in either LTE or NR, UE may transmit and/or receive both long TTIs and short TTIs in one carrier, in the same period.

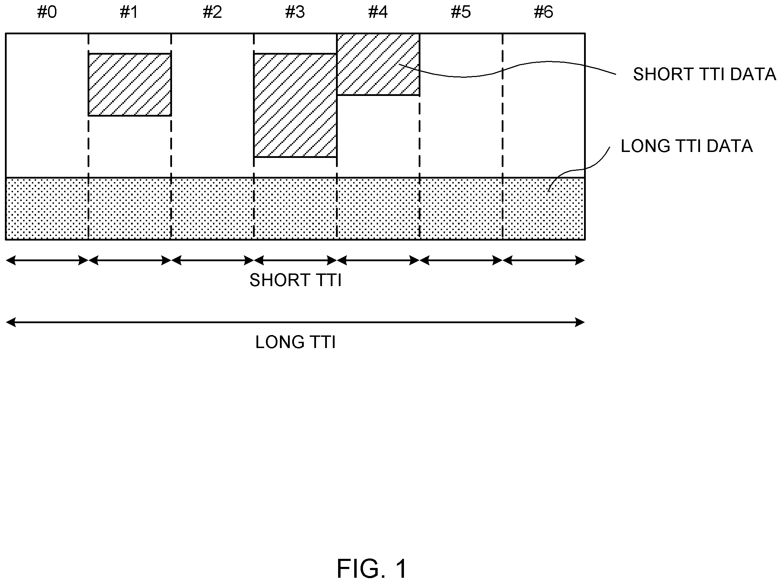

FIG. 1 is a diagram to show an example in which a long TTI and short TTIs co-exist. In each TTI, transmiting/receiving data transport block, code block, codeword and so on of can be mapped. A long TTI refers to a TTI having a longer time duration than a short TTI, and may be referred to as a "normal TTI," a "normal subframe," a "long subframe," and the like. A short TTI refers to a TTI having a shorter time duration than a long TTI, and may be referred to as a "shortened TTI," a "partial TTI (partial or fractional TTI)," a "shortened subframe," a "partial subframe," and so on.

A long TTI, for example, has a time duration of 1 ms, and is comprised of fourteen symbols (in the event normal cyclic prefix (CP) is used) or comprised of twelve symbols (in the event enhanced CP is used). A long TTI may be suitable for services that do not require strict latency reduction, such as eMBB and MTC.

A short TTI may be comprised of, for example, fewer symbols (for example, two symbols) than a long TTI, and the time duration of each symbol (symbol duration) may be the same as that of a long TTI (for example, 66.7 µs). Alternatively, a short TTI may be comprised of the same number of symbols as a long TTI, and the symbol duration of each symbol may be shorter than that of a long TTI. When using short TTIs, the time margin for processing (for example, encoding, decoding, etc.) in UEs and/or base stations grows, so that the processing latency can be reduced. Short TTIs may be suitable for services that require strict latency reduction, such as URLLC.

Note that, although examples will be shown in this specification where seven short TTIs (for example, short TTI length = two symbols long) are included in a long TTI (for example, long TTI length = 1 ms), the format of each TTI is not limited to this. For example, long TTIs and/or short TTIs may have other time durations than the above examples, and short TTIs of a variety of short TTI lengths may be used within one long TTI. Also, any number of short TTIs may be contained in one long TTI.

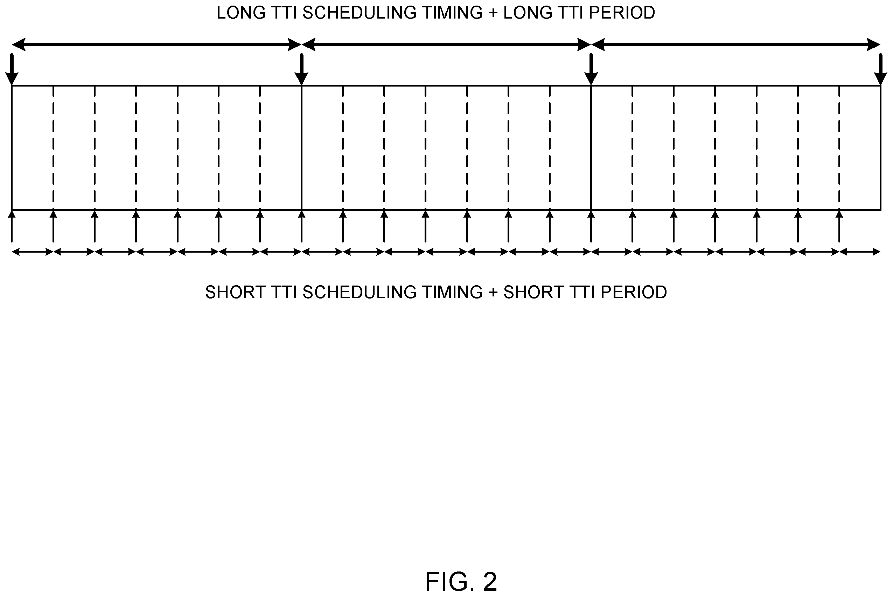

FIG. 2 is a diagram to show examples of long TTI and short TTI scheduling timings and periods. In FIG. 2, a long TTI scheduling timing is provided for every long TTI period, and a short TTI scheduling timing is provided for every short TTI period. At each scheduling timing, scheduling information pertaining to the TTI starting from this timing (or a predetermined TTI) may be reported.

Note that the scheduling information may be reported in downlink control information (DCI). For example, DCI to schedule receipt of DL data may be referred to as a "DL assignment," and DCI to schedule transmission of UL data may also be referred to as a "UL grant."

As shown in FIG. 2, it is preferable that short TTI can be scheduled more often than long TTIs. Otherwise, the benefit of latency reduction by short TTIs would be limited. Therefore, it is preferable that UE monitors DCI for short TTIs more often than DCI for long TTIs.

Note that, DL data that is scheduled is normally transmitted in the same TTI as that of the DL assignment, but this is by no means limiting. Also, UL data that is scheduled is normally transmitted in a different TTI from that of the UL grant (for example, transmitted in a predetermined later TTI), but this is by no means limiting.

In addition, while FIG. 2 shows an example in which the TTI length and the cycle in which scheduling can be made (the interval between scheduling timings) are the same, the cycle of scheduling timings may be shorter than the TTI length. For example, to transmit and receive a long TTI or a short TTI comprised of X symbols, a UE may monitor and blind-decode DL assignments and/or UL grants in a cycle of X/2 symbols. In this case, scheduling can be made every X/2 symbols, when scheduling is made in this TTI, the UE transmits and/or receives TTIs comprised of X symbols, from this scheduling timing on.

Now, once certain radio resources are scheduled as resources for a long TTI addressed to a certain UE, it is difficult to allocate these radio resources for short TTIs again. Short TTI traffic may occur even while a long TTI that is already scheduled is transmitted. In this case, waiting until the radio resources become available (for example, waiting until the transmission of the long TTI is complete) would only cause a long delay in the communication of short TTIs.

Therefore, for example, presuming DL communication, research is underway to allow a base station to puncture part (or all) of the resources for a long TTI and schedule short TTIs even during the period the long TTI is transmitted (this kind of scheduling may be referred to as "interrupt," "embedding," and so on). Also, where encoding is executed on assumption that resources that are allocated for data are all available for use, puncturing refers to not mapping encoded symbols to resources that are actually not available for use (that is, making resources free).

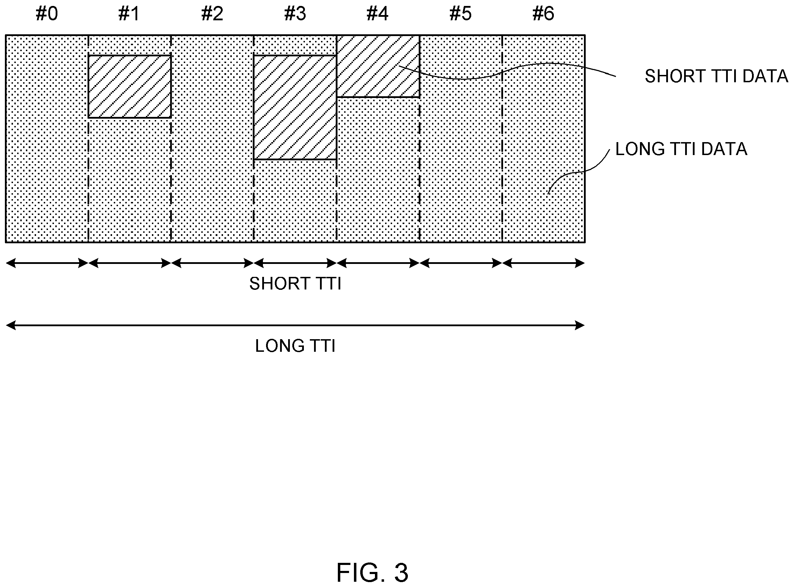

FIG. 3 is a diagram to show an example in which short TTIs interrupt a long TTI. Short TTI data is mapped to parts in the resources where a long TTI data was going to be mapped.

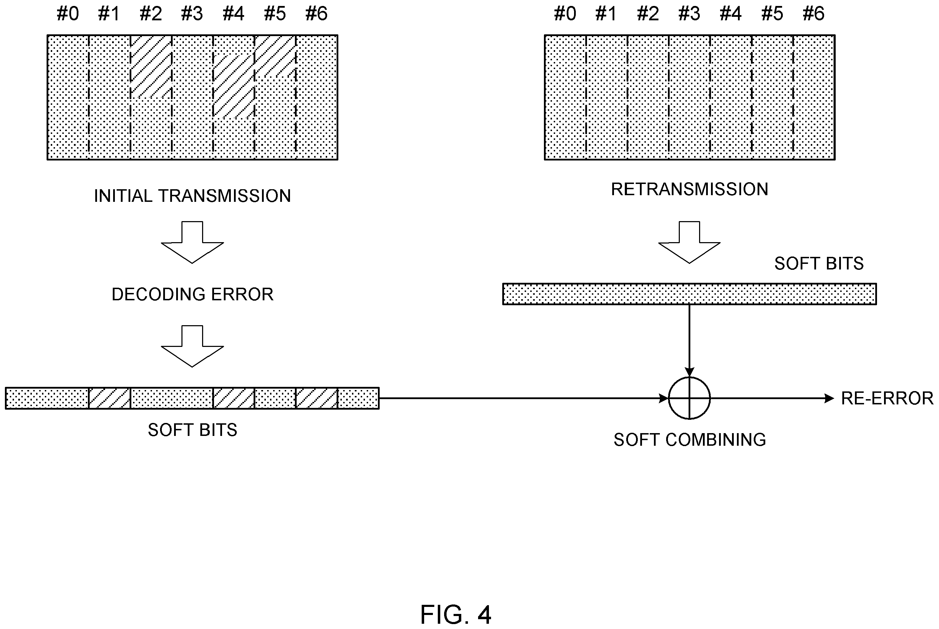

When an interrupt by a short TTI occurs, there is a high possibility that UE fails to decode the long TTI data, and the long TTI data is retransmitted based on HARQ. However, decoding using this HARQ retransmission tends to fail. The reason of this will be explained below with reference to FIG. 4.

FIG. 4 is a diagram to explain a failure of HARQ retransmission of punctured long TTI data. Referring to FIG. 4, in the initial transmission of a long TTI, part of the resources is punctured by short TTIs that interrupt. Assume that UE tries to decode the long TTI data but fails.

When the long TTI data is received, the UE stores (saves) the soft bits (which may be referred to as "soft channel bits") obtained in the decoding process in a soft buffer for decoding (which may be also referred to as an "IR (Incremental Redundancy) buffer"). The soft bits not only include the decoding results of the resources used for the long TTI data, but also include the decoding results of the resources overwritten (punctured) by short TTIs.

Therefore, even if the correct soft bits of the long TTI is obtained by retransmission, when these soft bits are soft-combined ("soft-combining") with the soft bits generated under the influence of short TTI-induced puncturing, there is a possibility that decoding fails again. Note that soft combining may be referred to as "HARQ combining."

So, the present inventors have come up with a method that would allow proper decoding and/or retransmission to be executed even when long TTI data is punctured by short TTIs.

Now, embodiments of the present invention will be described in detail below with reference to the accompanying drawings. Note that the radio communication methods according to the herein-contained embodiments may be used individually or may be used in combination.

### (Radio communication method)

### <First Embodiment>

The first embodiment of the present invention relates to a case where a long TTI and short TTIs that overwrite at least a part of the resources of the long TTI are addressed to the same UE. For example, the first embodiment is suitable for the case where UE receives eMBB service and URLLC service at the same time.

In the first embodiment, when a DL signal that is transmitted in a short TTI is scheduled in a resource that is allocated to a DL signal transmitted in a long TTI, the UE performs the decoding process without using the soft bits corresponding to the DL signal transmitted in the short TTI.

### [Embodiment 1.1]

According to embodiment 1.1, UE where a long TTI is scheduled tries to detect scheduling information for short TTIs as well. Then, when the UE detects scheduling information for a short TTI with respect to a radio resource where a long TTI is already scheduled, while the soft bit of the long TTI is saved and the soft bit corresponding to the short TTI resource that is scheduled is also saved, an indication that this soft bit is unknown is configured (that is, the receiving end makes the log likelihood ratio (LLR) of the soft bit (the location of the soft bit) input to the decoder 0).

In this case, the UE can perform the decoding process (HARQ combining process) of the long TTI data without using the soft bit corresponding to the short TTI resource, among the soft bits saved. Note that the UE may have a separate soft buffer for saving soft bits of short TTI data, and perform the decoding process of short TTI data using these soft bits (the same applies to each of the following embodiments). Since the soft buffer for saving soft bits of short TTI data only stores soft bits of short TTI data, long TTIs have no impact on these soft bits.

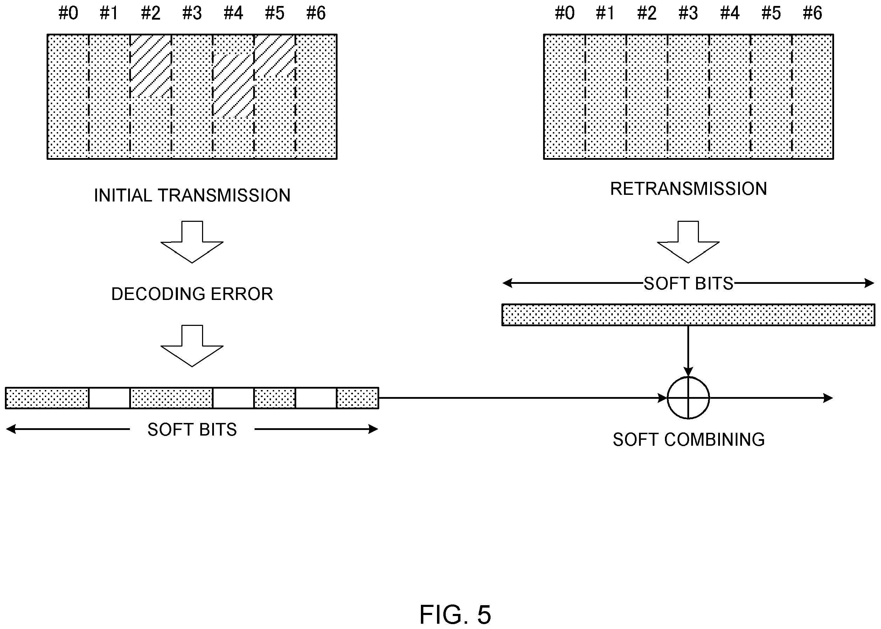

FIG. 5 is a diagram to show an example of HARQ combining according to embodiment 1.1. FIG. 5 shows an example similar to that of FIG. 4, but the handling of the soft buffer is different. Upon detecting the scheduling related to short TTIs #2, #4 and #5, the UE sets the soft bits corresponding to these short TTI resources to LLR=0.

Thus, it is possible to prevent the soft buffer for long TTI data from being contaminated with short TTI data. In FIG. 5, long TTI data that is retransmitted is combined only with soft bits of long TTI data, so that improved decoding performance can be expected after HARQ combining.

### [Embodiment 1.2]

Embodiment 1.2 is different from embodiment 1.1 in the way soft bits of long TTIs are saved. According to embodiment 1.2, if the UE detects short TTI scheduling information related to a radio resource to which a long TTI is already scheduled, the UE does not save soft bits corresponding to the scheduled short TTI resource when saving the soft bits of a long TTI.

In this case, the UE does not save the soft bits corresponding to short TTI resources, so that the UE can perform the decoding process (HARQ combining process) without using the soft bits corresponding to short TTI resources.

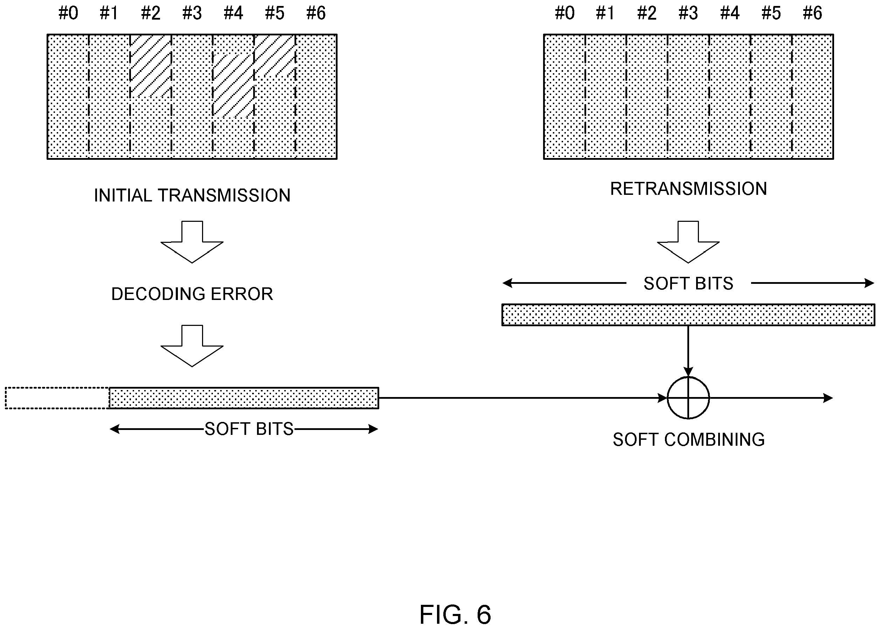

FIG. 6 is a diagram to show an example of HARQ combining according to embodiment 1.2. FIG. 6 shows an example similar to that of FIG. 4, but the handling of the soft buffer is different. Upon detecting scheduling related to short TTIs #2, #4 and #5, the UE does not save the soft bits corresponding to these short TTI resources.

This can prevent the soft buffer for long TTI data from being contaminated with short TTI data. In the case of FIG. 6, long TTI data that is retransmitted is combined only with soft bits of long TTI data, so that improved decoding performance can be expected after HARQ combining. Also, when puncturing by short TTIs occurs, it is possible to reduce the soft buffer size for long TTI data to be saved.

Note that long TTI data's soft bits are preferably designed so that which bits of the original long TTI data the soft bits corresponds to can be determined. For example, if a long TTI is punctured in a time resource (or a short TTI is scheduled in the time resource), the UE may memorize information about this time resource (for example, the short TTI's index), and identify the soft bits of saved long TTI data based on this information.

Also, resources in a long TTI that can be punctured by short TTIs (time resources where short TTIs can be scheduled) may be determined in advance, or may be configured in UE through higher layer signaling and so on. This allows the UE to determine which bits of the original long TTI data soft bits correspond to.

According to the first embodiment of the present invention described above, it is possible to reduce the impact of decoding errors due to long TTI data punctured by short TTIs.

Note that, in each example described above, soft bits corresponding to scheduled short TTI resources are either indicated as unknown or not saved, but soft bits of all resources corresponding to scheduled short TTI periods may be indicated as unknown or not be saved. By this means, when storing long TTI soft bits, a user terminal does not have to think about the amount, locations and so forth of resources where scheduled short TTIs are allocated, so that it is possible to reduce the processing load on the user terminal.

### <Variation of First Embodiment>

A case has been shown with the above example where only long TTI data is retransmitted upon HARQ retransmission, but this is by no means limiting. For example, it might occur that, upon retransmission, not only long TTI data, but also short TTIs are transmitted (or embedded). In this case, based on the retransmission data received, UE may determine which soft bits are combined with the soft buffer, based on the same policy as in embodiment 1.1 or 1.2.

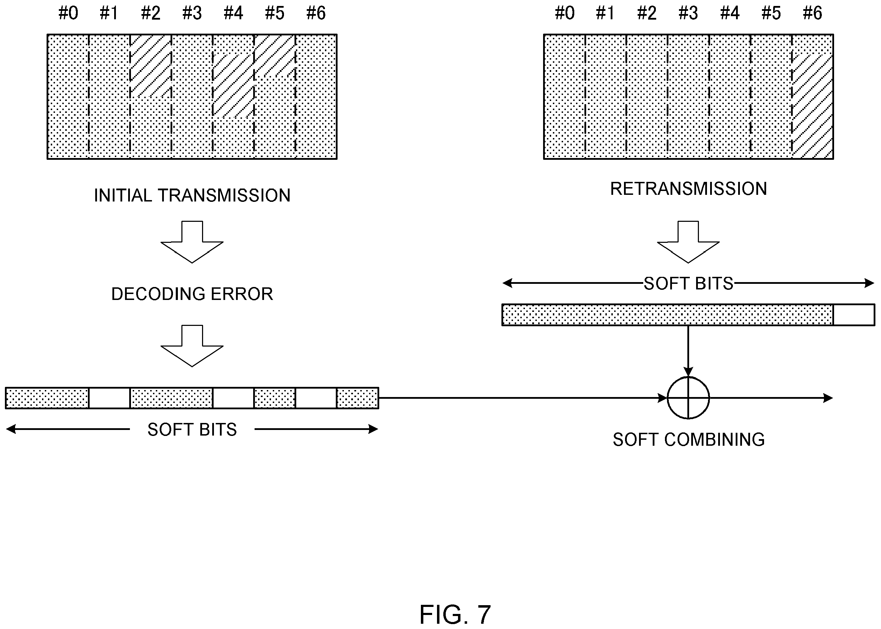

FIG. 7 is a diagram to show a variation of HARQ combining according to embodiment 1.1. FIG. 7 shows an example that is similar to FIG. 5, but that differs in that part of retransmitted data is short TTI data.

In a long TTI that is retransmitted, UE detects scheduling related to short TTI #7. The UE tries to decode the received long TTI data, and, among the soft bits obtained as a result of decoding, sets the soft bit corresponding to the detected short TTI resource to LLR=0.

By this means, the long TTI data can be used for soft-combining for both data that is saved in the soft buffer and data that is retransmitted, so that improved decoding performance can be expected after HARQ combining.

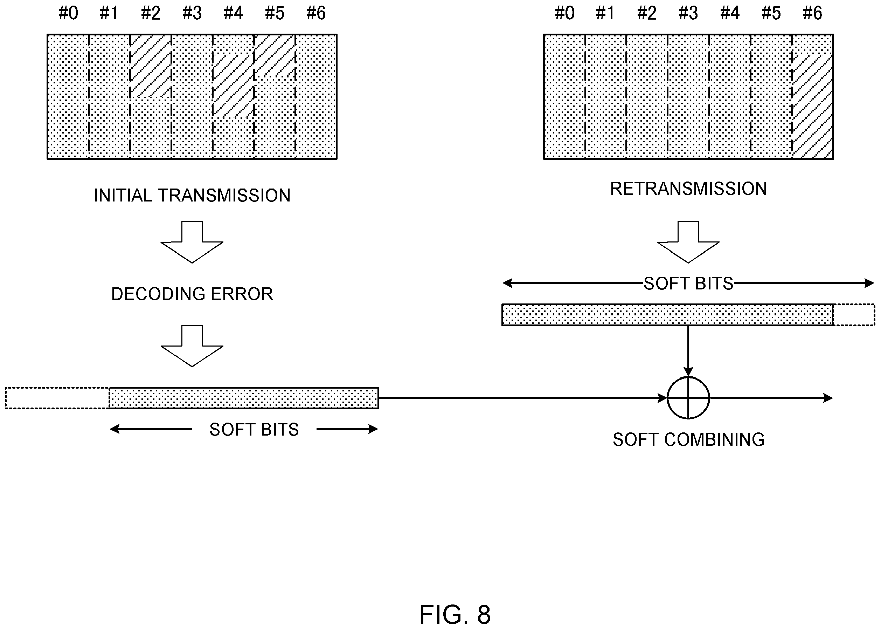

FIG. 8 is a diagram to show a variation of HARQ combining according to embodiment 1.2. FIG. 8 shows an example that is similar to FIG. 6, but that differs in that part of the retransmitted data is short TTI data.

In the long TTI that is retransmitted, UE detects scheduling related to short TTI #7. The UE tries to decode the received long TTI data, and, among the soft bits obtained as a result of decoding, does not save (that is, does not soft-combine) the soft bit corresponding to the short TTI resource detected.

By this means, the long TTI data can be used for soft-combining for both data that is saved in the soft buffer and data that is retransmitted, so that improved decoding performance can be expected after HARQ combining.

Note that soft bits may be handled in the same way as in each embodiment described above whether the redundancy version (RV) of data saved in the soft buffer and the RV of retransmitted data are the same or different.

### <Variation 2 of First Embodiment>

Embodiments 1.1 and 1.2 have shown examples in which long TTI data is lost due to puncturing by short TTIs, and in which the missing data is recovered by retransmission. However, if decoding failures are caused only by puncturing, retransmitting the whole of long TTI data of the same RV or a different RV is too redundant.

So, if there is long TTI data, where the HARQ process is the same, and where the RV is the same or different, the base station may retransmit the data of a specific short TTI period in this long TTI.

The DCI to command retransmission may be "long-TTI DCI" (DCI for scheduling long TTIs), or may be "short-TTI DCI" (DCI for scheduling short TTIs).

When long-TTI DCI commands retransmission, this DCI may include information that shows which part of a long TTI is a specific short TTI period that is retransmitted (in the same or different RV). For example, assuming that a long TTI is comprised of a predetermined number of short TTIs, long-TTI DCI may include information that indicates a period of a number of short TTIs, no greater than the above predetermined number (this information may be, for example, a bitmap that shows a predetermined number of bits, and that shows, per bit, whether or not the long TTI data is retransmitted in each short TTI).

When short-TTI DCI commands retransmission, this DCI may be transmitted to schedule retransmission of long TTI data in a period corresponding to the long TTI (in the same or different RV). In this case, UE monitors for short-TTI DCI in every short TTI period (or in the punctured, corresponding short TTI period).

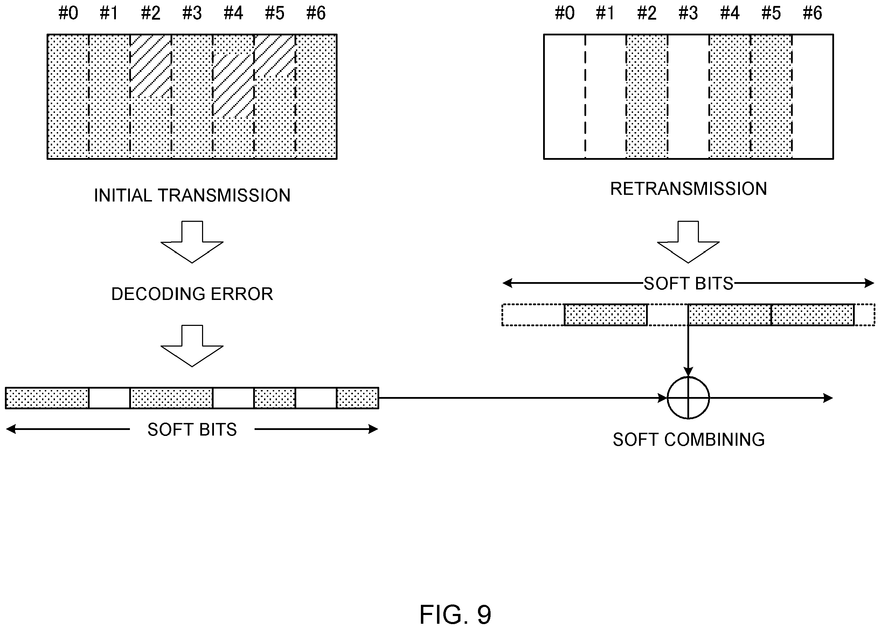

FIG. 9 is a diagram to show variation 2 of HARQ combining according to embodiment 1.1. FIG. 9 shows an example that is similar to that of FIG. 5, except that the data that is retransmitted is long TTI data corresponding to time resources that were punctured by short TTI data in previous transmission.

For example, UE may detect long-TTI DCI that indicates long TTI data is retransmitted in short TTIs #2, #4 and #5, and receive retransmitted long TTI data in periods corresponding to these short TTIs.

Also, the UE may detect, in each of short TTIs #2, #4 and #5, short-TTI DCI that indicates punctured long TTI data is retransmitted, and receive retransmitted long TTI data in periods corresponding to these short TTIs.

Note that, although the above example has shown a case where retransmission takes place in time periods where a long TTI has been punctured (for example, short TTIs #2, #4 and #5), when retransmission is to take place, this retransmission may be transmitted and/or received, for example, in a short TTI corresponding to a different time period from the time period where previous transmission took place. Even when the time period changes -- in particular, when retransmission is made in a different RV -- it is possible to achieve adequate retransmission and combining gains. In this way, by allowing retransmission to be made in short TTIs corresponding to different time periods from the time period where previous transmission took place, it is possible to improve the flexibility of the scheduler, and increase throughput.

Note that, when long TTI data is to be retransmitted in a short TTI, part or all of the long TTI data's transport block, code block and codeword may be transmitted in the short TTI. If a long TTI including one transport block, code block and codeword is to be retransmitted in a short TTI, part of the transport block, code block and codeword may be included in the short TTI. Also, when a long TTI including a plurality of transport blocks, code blocks and codewords is to be retransmitted in a short TTI, one or a number of (a number not more than the number included in the TTI) transport blocks, code blocks and codewords may be included in this short TTI.

According to variation 2 of the first embodiment, long TTI data that is punctured by short TTIs can be retransmitted with low overhead.

### <Variation 3 of First Embodiment>

Variation 3 can reduce the overhead incurred by retransmission more than variation 2 described above can. According to variation 3, if there is long TTI data, where the HARQ process is the same, and where the RV is the same or different, the base station retransmits punctured data (resource) of a specific short TTI period in this long TTI. That is, the granularity of retransmission is finer (fewer resources are retransmitted) than in variation 2.

The DCI to command retransmission may be DCI for long TTIs or DCI for short TTIs. This DCI may include information (for example, resource allocation information) that shows which frequency resource is retransmitted (in the same or different RV).

When long-TTI DCI commands retransmission, this DCI may include information that shows which resource of a long TTI is retransmitted (in the same or different RV).

When short-TTI DCI commands retransmission, this DCI may be transmitted to schedule retransmission of long TTI data in a period corresponding to the long TTI (in the same or different RV). In this case, UE monitors for short-TTI DCI in every short TTI period (or in the punctured, corresponding short TTI period).

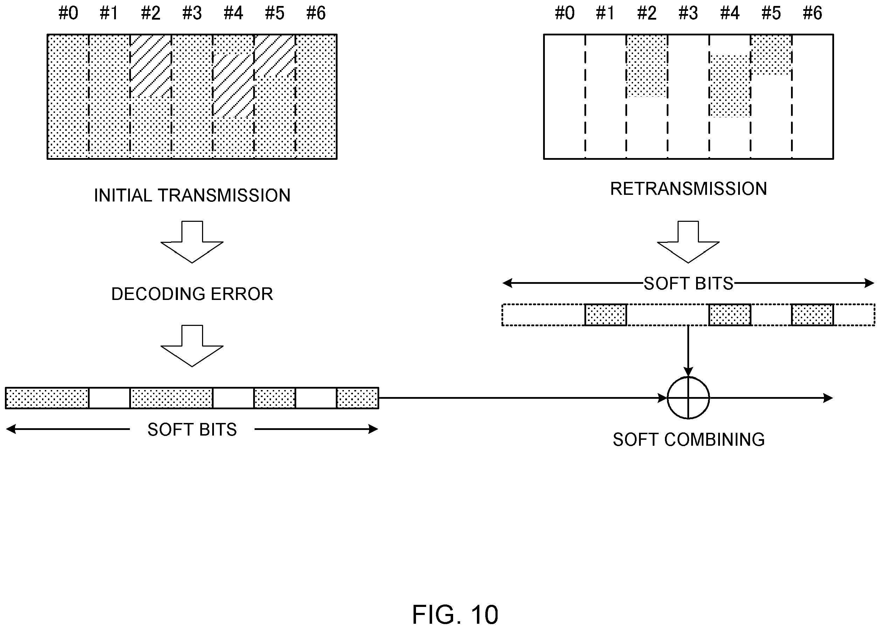

FIG. 10 is a diagram to show variation 3 of HARQ combining according to embodiment 1.1. FIG. 10 shows an example that is similar to that of FIG. 5 except that the data that is retransmitted is long TTI data corresponding to time resources that were punctured by short TTI data in previous transmission.

For example, the UE may detect long-TTI DCI that indicates long TTI data is retransmitted in the resources of short TTIs #2, #4 and #5, and receive retransmitted long TTI data in punctured resources.

Also, the UE may detect, in each of short TTIs #2, #4 and #5, short-TTI DCI that indicates (the resource of) punctured long TTI data is retransmitted, and receive retransmitted long TTI data in punctured resources.

Note that, although the above example has shown a case where retransmission takes place in the resources of time periods where a long TTI has been punctured (for example, short TTIs #2, #4 and #5), when retransmission is to take place, this retransmission may be transmitted and/or received, for example, in a short TTI corresponding to a different time period from the time period where previous transmission took place. Also, when each punctured resource is retransmitted, the UE may receive each retransmitted resource in resources of a plurality of short TTIs, or in a resource of one short TTI.

According to variation 3 of the first embodiment, long TTI data that is punctured by short TTIs can be retransmitted with low overhead.

### <Second Embodiment>

If a long TTI and a short TTI are both addressed to the same UE as in the first embodiment, the UE can identify the resource overwritten by the short TTI by detecting DCI (scheduling information) pertaining to the short TTI.

However, when a long TTI addressed to a given UE is punctured by a short TTI addressed to another UE, then this given UE is unable to find out which resource is overwritten.

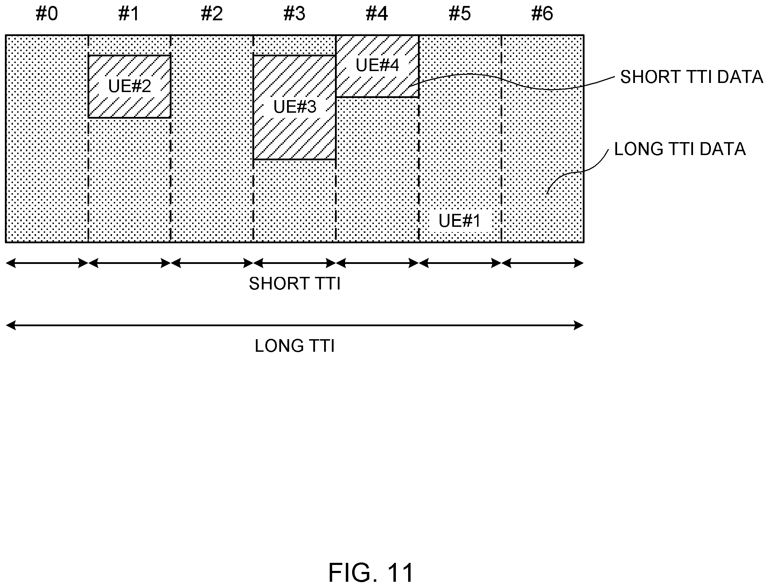

FIG. 11 is a diagram to show an example in which a long TTI and short TTIs are transmitted to different UEs. In FIG. 11, long TTI data for UE 1 is transmitted, but some of the resources are punctured by short TTI data for other UEs (UE 2, UE 3 and UE 4).

Each UE can detect the DCI for itself, but cannot detect DCIs for other terminals. Consequently, UE 1, being unable to detect scheduling information for other UEs, tries to decode the resources of short TTI data for other UEs, as long TTI data, and fails.

In view of this problem, the present inventors have derived a second embodiment. The second embodiment of the present invention assumes a case where a long TTI, and a short TTI, which overwrites at least part of the resources of the long TTI, are addressed to different UEs.

In the second embodiment, DCI for short TTIs is introduced in two types of DCI formats. One is a DCI format that schedules short TTIs for a given UE (target UE). The other one is a DCI format that commands puncturing of long TTI resources to UE where a long TTI is scheduled.

The resources to be punctured (which may be referred to as "puncturing resources," "punctured resources," and so forth) may be resources that are scheduled for short TTIs for other UEs than the UE where the long TTI is scheduled.

According to the second embodiment, UE monitors at least the following three types of DCIs:
(1) long-TTI DCI (DL control information for long TTI scheduling);
(2) short-TTI DCI (DL control information for short TTI scheduling); and
(3) puncturing DCI (DL control information for commanding puncturing).

The DCI of (1) has a relatively long cycle, and may be transmitted and/or received, for example, at a frequency of once per subframe (one long TTI). The DCIs of (2) and (3) have a relatively short cycle, and may be transmitted and/or received, for example, at a frequency of once every two symbols (one short TTI). Note that the DCIs of (2) and (3) may have different transmission cycles (monitoring cycles), and, for example, one may be an integral multiple of the other.

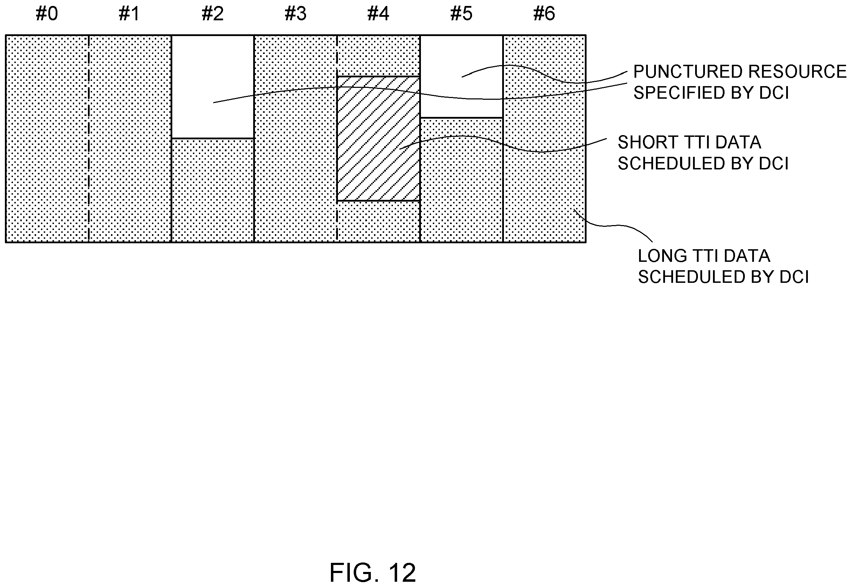

FIG. 12 is a diagram to show examples of resources specified by the DCIs of the second embodiment. In FIG. 12, the long TTI data is scheduled by long-TTI DCI. The punctured resources of short TTIs #2 and #5 may be designated by separate puncturing DCIs, or or may be designated together, by one puncturing DCI. The short TTI data of short TTI #4 is scheduled by short-TTI DCI. The long-TTI DCI and the short-TTI DCI are generated and transmitted so as to be detected by the same UE.

To receive the DL data, for example, when short-TTI DCI schedules short TTIs in part of the resources for the long TTI's DL data, or when puncturing DCI commands puncturing of these resources, UE may puncture these resources. If the UE fails to decode the DL data of the long TTI, the UE may indicate the soft bits corresponding to punctured resources as unknown, or may not save these soft bits (see the first embodiment).

The UE may decode short TTI data that is scheduled by short-TTI DCI, apart from the long TTI data (by using another soft buffer).

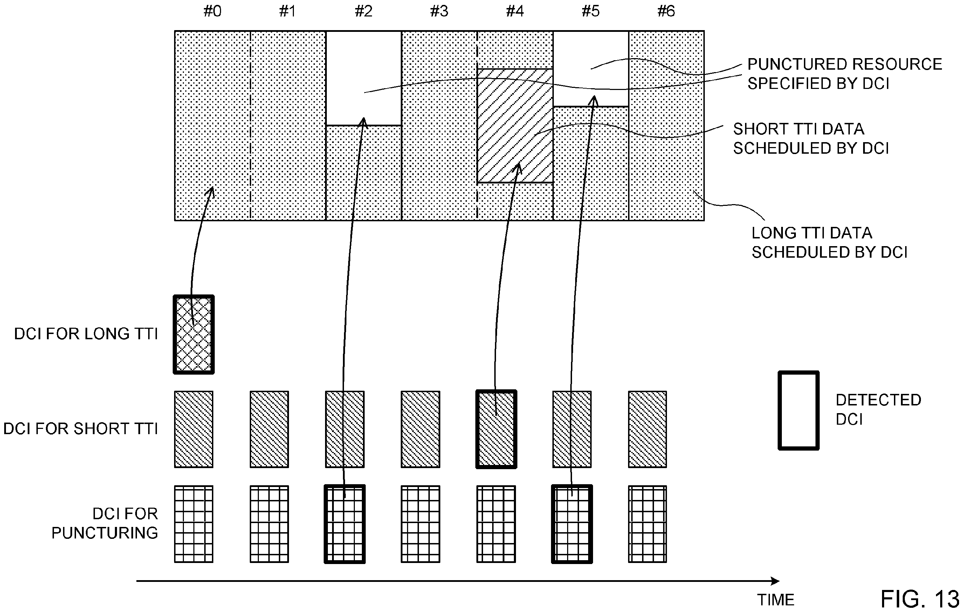

FIG. 13 is a diagram to show an example of UE operation according to the second embodiment. In FIG. 13, long-TTI DCI is transmitted in short TTI #0 (the first short TTI included in the long TTI), and the UE detects the long-TTI DCI at this timing, and starts performing receiving processes for the long TTI data (receipt, decoding, and so forth).

Also, in each short TTI, the UE tries to detect short-TTI DCI and puncturing DCI. In the case of FIG. 13, the UE detects puncturing DCI in short TTIs #2 and #5, and short-TTI DCI in short TTI #4. Based on these DCIs, the UE controls the configuration or saving of the soft bits of the long TTI data.

Also, transmission of UL data is the same as receipt of DL data, which has been described earlier with reference to FIG. 13 and/or others. That is, to transmit UL data, for example, when short-TTI DCI schedules short TTIs in part of the resources for the long TTI's UL data, or when puncturing DCI commands puncturing of these resources, the UE may puncture these resources.

Note that puncturing DCI may be UE-specific DCI, or may be UE-common DCI. By using UE-specific DCI, puncturing can be controlled flexibly, on a per UE basis. Also, by using common DCI between UEs, overhead can be reduced.

The content of puncturing DCI may include information about the frequency resource (for example, a resource block (RB)) to be punctured. For example, UE-common puncturing DCI may command specifying punctured RBs from all bands in predetermined short TTI periods. Also, UE-specific puncturing DCI may command specifying punctured RBs from among the long TTI frequency resources scheduled in predetermined short TTI periods. In the latter case, punctured RBs can be identified with a small amount of information.

The UE blind-decodes the short-TTI DCI and the puncturing DCI separately, but these DCIs may share blind-decoding. For example, if these DCIs have the same payload size, the UE may detect both DCIs without increasing the number of times to perform blind decoding. In this case, it is possible to introduce control for detecting both DCIs without increasing the processing load of blind decoding on the UE.

For example, the UE may distinguish between the two DCIs based on the indicator (for example, the radio network temporary identifier (RNTI)) that is used for cyclic redundancy check (CRC) scrambling. Also, the short-TTI DCI and puncturing DCI may be identified based on a predetermined bit included in each DCI (for example, a predetermined bit="0" indicates short-TTI DCI, a predetermined bit="1" indicates puncturing DCI, and so on).

If the UE detects short-TTI DCI and detects puncturing DCI in the same short TTI period at the same time, and, furthermore, the resources to be punctured overlap, the UE may decide to transmit/receive signasl in resources where transmission/receipt of short TTIs is commanded by DCI. In this case, for example, UE-common puncturing DCI may first command puncturing a wide range of resources with respect to all UEs, and then short TTIs may be scheduled for part of the UEs, individyually, in all or part of the resources where puncturing has been commanded by the UE-common puncturing DCI.

According to the second embodiment described above, UE can identify short TTI resources allocated to other UEs by detecting puncturing DCI, so that it is possible to reduce the impact of decoding errors caused by punctured long TTI data.

### (Variations)

Information related to the methods of controlling soft bits described with each embodiment, information related to puncturing DCI, and/or other pieces of information may be defined in the specification in advance, and may be reported to (configured in, indicated to, etc.) UE by using higher layer signaling (for example, radio resource control (RRC) signaling, broadcast information (for example, the master information block (MIB), system information blocks (SIBs), etc.), medium access control (MAC) signaling), physical layer signaling (for example, downlink control information (DCI)), and/or other signals, or by combining these.

For example, information that specifies which of the control methods described in the first embodiment is used to save soft bits, how to retransmit long TTI data, and so forth may be reported to UE. Also, information as to whether puncturing DCI can be used or not (present or not) may be reported to the UE. The UE may control the decoding of long TTI data based on the information reported.

### (Radio Communication System)

Now, the structure of the radio communication system according to one embodiment of the present invention will be described below. In this radio communication system, communication is performed using one or a combination of the radio communication methods according to the herein-contained embodiments of the present invention.

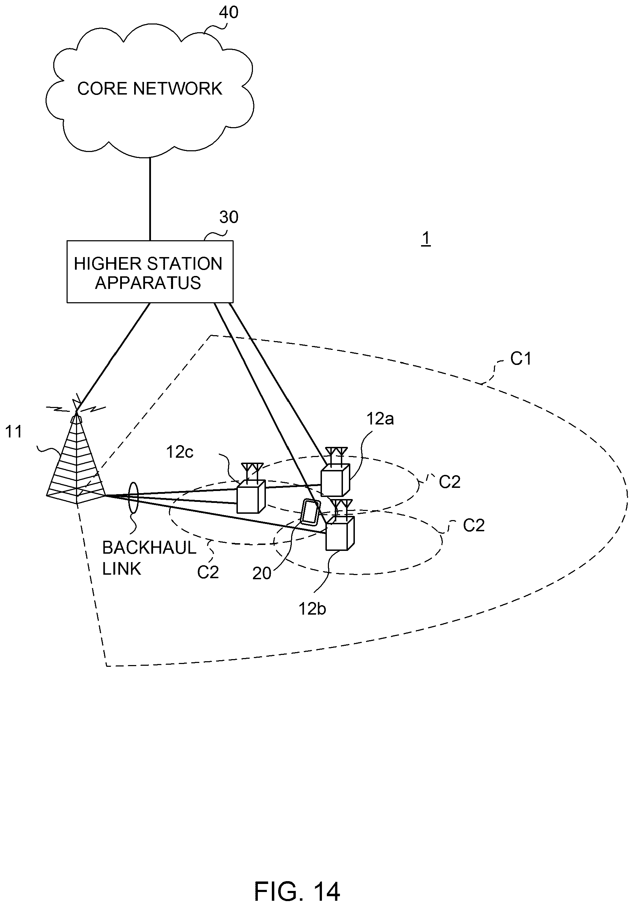

FIG. 14 is a diagram to show an exemplary schematic structure of a radio communication system according to one embodiment of the present invention. A radio communication system 1 can adopt carrier aggregation (CA) and/or dual connectivity (DC) to group a plurality of fundamental frequency blocks (component carriers) into one, where the LTE system bandwidth (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G, "IMT-Advanced," "4G (4th generation mobile communication system)," "5G (5th generation mobile communication system)," "FRA (Future Radio Access)," "New-RAT (Radio Access Technology)" and so on, or may be seen as a system to implement these.

The radio communication system 1 includes a radio base station 11 that forms a macro cell C1, with a relatively wide coverage, and radio base stations 12 (12a to 12c) that are placed within the macro cell C1 and that form small cells C2, which are narrower than the macro cell C1. Also, user terminals 20 are placed in the macro cell C1 and in each small cell C2. The arrangement of cells and user terminals 20 is not limited to that shown in the drawing.

The user terminals 20 can connect with both the radio base station 11 and the radio base stations 12. The user terminals 20 may use the macro cell C1 and the small cells C2 at the same time by means of CA or DC. Furthermore, the user terminals 20 may apply CA or DC using a plurality of cells (CCs) (for example, five or fewer CCs or six or more CCs).

Between the user terminals 20 and the radio base station 11, communication can be carried out using a carrier of a relatively low frequency band (for example, 2 GHz) and a narrow bandwidth (referred to as, for example, an "existing carrier," a "legacy carrier" and so on). Meanwhile, between the user terminals 20 and the radio base stations 12, a carrier of a relatively high frequency band (for example, 3.5 GHz, 5 GHz and so on) and a wide bandwidth may be used, or the same carrier as that used in the radio base station 11 may be used. Note that the structure of the frequency band for use in each radio base station is by no means limited to these.

A structure may be employed here in which wire connection (for example, means in compliance with the CPRI (Common Public Radio Interface) such as optical fiber, the X2 interface and so on) or wireless connection is established between the radio base station 11 and the radio base stations 12 (or between two radio base stations 12).

The radio base station 11 and the radio base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each radio base station 12 may be connected with the higher station apparatus 30 via the radio base station 11.

Note that the radio base station 11 is a radio base station having a relatively wide coverage, and may be referred to as a "macro base station," a "central node," an "eNB (eNodeB)," a "transmitting/receiving point" and so on. Also, the radio base stations 12 are radio base stations having local coverages, and may be referred to as "small base stations," "micro base stations," "pico base stations," "femto base stations," "HeNBs (Home eNodeBs)," "RRHs (Remote Radio Heads)," "transmitting/receiving points" and so on. Hereinafter the radio base stations 11 and 12 will be collectively referred to as "radio base stations 10," unless specified otherwise.

The user terminals 20 are terminals to support various communication schemes such as LTE, LTE-A and so on, and may be either mobile communication terminals (mobile stations) or stationary communication terminals (fixed stations).

In the radio communication system 1, as radio access schemes, orthogonal frequency division multiple access (OFDMA) is applied to the downlink, and single-carrier frequency division multiple access (SC-FDMA) is applied to the uplink.

OFDMA is a multi-carrier communication scheme to perform communication by dividing a frequency bandwidth into a plurality of narrow frequency bandwidths (subcarriers) and mapping data to each subcarrier. SC-FDMA is a single-carrier communication scheme to mitigate interference between terminals by dividing the system bandwidth into bands formed with one or continuous resource blocks per terminal, and allowing a plurality of terminals to use mutually different bands. Note that the uplink and downlink radio access schemes are not limited to this combination, and other radio access schemes may be used as well.

In the radio communication system 1, a downlink shared channel (PDSCH (Physical Downlink Shared CHannel)), which is used by each user terminal 20 on a shared basis, a broadcast channel (PBCH (Physical Broadcast CHannel)), downlink L1/L2 control channels and so on are used as downlink channels. User data, higher layer control information and SIBs (System Information Blocks) are communicated in the PDSCH. Also, the MIB (Master Information Block) is communicated in the PBCH.

The downlink L1/L2 control channels include a PDCCH (Physical Downlink Control CHannel), an EPDCCH (Enhanced Physical Downlink Control CHannel), a PCFICH (Physical Control Format Indicator CHannel), a PHICH (Physical Hybrid-ARQ Indicator CHannel) and so on. Downlink control information (DCI), including PDSCH and PUSCH scheduling information, is communicated by the PDCCH. The number of OFDM symbols to use for the PDCCH is communicated by the PCFICH. HARQ (Hybrid Automatic Repeat reQuest) delivery acknowledgment information (also referred to as, for example, "retransmission control information," "HARQ-ACK," "ACK/NACK," and so forth) in response to the PUSCH is communicated by the PHICH. The EPDCCH is frequency-division-multiplexed with the PDSCH (downlink shared data channel) and used to communicate DCI and so on, like the PDCCH.

In the radio communication system 1, an uplink shared channel (PUSCH (Physical Uplink Shared CHannel)), which is used by each user terminal 20 on a shared basis, an uplink control channel (PUCCH (Physical Uplink Control CHannel)), a random access channel (PRACH (Physical Random Access CHannel)) and so on are used as uplink channels. User data, higher layer control information and so on are communicated by the PUSCH. Also, downlink radio quality information (CQI (Channel Quality Indicator)), delivery acknowledgement information and so on are communicated by the PUCCH. By means of the PRACH, random access preambles for establishing connections with cells are communicated.

In the radio communication system 1, cell-specific reference signals (CRSs), channel state information reference signals (CSI-RSs), demodulation reference signals (DMRSs), positioning reference signals (PRSs) and so on are communicated as downlink reference signals. Also, in the radio communication system 1, measurement reference signals (SRS (Sounding Reference Signal)), demodulation reference signal (DMRS) and so on are communicated as uplink reference signals. Note that the DMRS may be referred to as a "user terminal-specific reference signal (UE-specific Reference Signal)." Also, the reference signals to be communicated are by no means limited to these.

### (Radio Base Station)

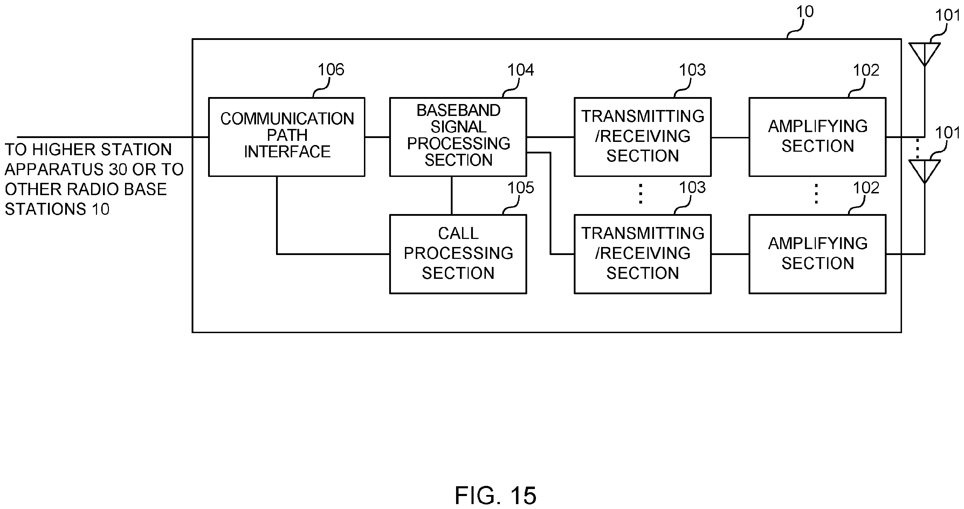

FIG. 15 is a diagram to show an exemplary overall structure of a radio base station according to one embodiment of the present invention. A radio base station 10 has a plurality of transmitting/receiving antennas 101, amplifying sections 102, transmitting/receiving sections 103, a baseband signal processing section 104, a call processing section 105 and a communication path interface 106. Note that one or more transmitting/receiving antennas 101, amplifying sections 102 and transmitting/receiving sections 103 may be provided.

User data to be transmitted from the radio base station 10 to a user terminal 20 on the downlink is input from the higher station apparatus 30 to the baseband signal processing section 104, via the communication path interface 106.

In the baseband signal processing section 104, the user data is subjected to transmission processes, including a PDCP (Packet Data Convergence Protocol) layer process, user data division and coupling, RLC (Radio Link Control) layer transmission processes such as RLC retransmission control, MAC (Medium Access Control) retransmission control (for example, an HARQ (Hybrid Automatic Repeat reQuest) transmission process), scheduling, transport format selection, channel coding, an inverse fast Fourier transform (IFFT) process and a precoding process, and the result is forwarded to each transmitting/receiving section 103. Furthermore, downlink control signals are also subjected to transmission processes such as channel coding and an inverse fast Fourier transform, and forwarded to each transmitting/receiving section 103.

Baseband signals that are precoded and output from the baseband signal processing section 104 on a per antenna basis are converted into a radio frequency band in the transmitting/receiving sections 103, and then transmitted. The radio frequency signals having been subjected to frequency conversion in the transmitting/receiving sections 103 are amplified in the amplifying sections 102, and transmitted from the transmitting/receiving antennas 101. The transmitting/receiving sections 103 can be constituted by transmitters/receivers, transmitting/receiving circuits or transmitting/receiving apparatus that can be described based on general understanding of the technical field to which the present invention pertains. Note that a transmitting/receiving section 103 may be structured as a transmitting/receiving section in one entity, or may be constituted by a transmitting section and a receiving section.

Meanwhile, as for uplink signals, radio frequency signals that are received in the transmitting/receiving antennas 101 are each amplified in the amplifying sections 102. The transmitting/receiving sections 103 receive the uplink signals amplified in the amplifying sections 102. The received signals are converted into the baseband signal through frequency conversion in the transmitting/receiving sections 103 and output to the baseband signal processing section 104.

In the baseband signal processing section 104, user data that is included in the uplink signals that are input is subjected to a fast Fourier transform (FFT) process, an inverse discrete Fourier transform (IDFT) process, error correction decoding, a MAC retransmission control receiving process, and RLC layer and PDCP layer receiving processes, and forwarded to the higher station apparatus 30 via the communication path interface 106. The call processing section 105 performs call processing (such as setting up and releasing communication channels), manages the state of the radio base stations 10 and manages the radio resources.

The communication path interface section 106 transmits and receives signals to and from the higher station apparatus 30 via a predetermined interface. Also, the communication path interface 106 may transmit and receive signals (backhaul signaling) with other radio base stations 10 via an inter-base station interface (which is, for example, optical fiber that is in compliance with the CPRI (Common Public Radio Interface), the X2 interface, etc.).

The transmitting/receiving sections 103 may, in a given carrier (cell, CC, etc.), transmit and/or receive signals in a second TTI (for example, a long TTI), which has a longer TTI length than a first TTI (for example, a short TTI). In addition, the transmitting/receiving sections 103 may transmit, to the user terminal 20, DCI (puncturing DCI) that specifies resources that are punctured by short TTI data among resources allocated to long TTI data.

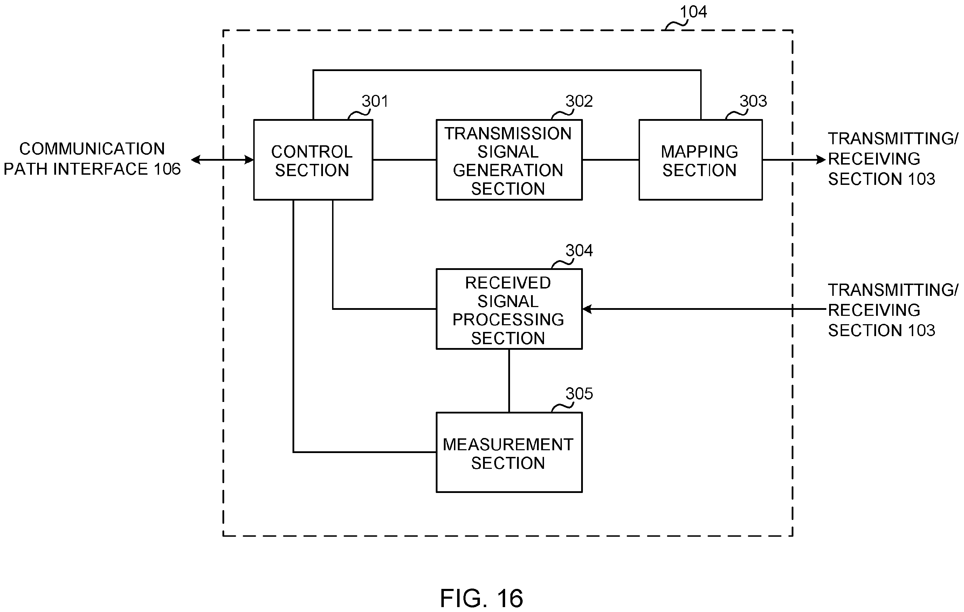

FIG. 16 is a diagram to show an exemplary functional structure of a radio base station according to one embodiment of the present invention. Note that, although this example primarily shows functional blocks that pertain to characteristic parts of the present embodiment, the radio base station 10 has other functional blocks that are necessary for radio communication as well.

The baseband signal processing section 104 has a control section (scheduler) 301, a transmission signal generation section 302, a mapping section 303, a received signal processing section 304 and a measurement section 305. Note that these configurations have only to be included in the radio base station 10, and some or all of these configurations may not be included in the baseband signal processing section 104.

The control section (scheduler) 301 controls the whole of the radio base station 10. The control section 301 can be constituted by a controller, a control circuit or control apparatus that can be described based on general understanding of the technical field to which the present invention pertains.

The control section 301, for example, controls the generation of signals in the transmission signal generation section 302, the allocation of signals by the mapping section 303, and so on. Furthermore, the control section 301 controls the signal receiving processes in the received signal processing section 304, the measurements of signals in the measurement section 305, and so on.

The control section 301 controls the scheduling (for example, resource allocation) of system information, downlink data signals (for example, signals transmitted in the PDSCH) and downlink control signals (for example, signals communicated in the PDCCH and/or the EPDCCH). Also, the control section 301 controls the generation of downlink control signals (for example, delivery acknowledgement information and so on), downlink data signals and so on, based on whether or not retransmission control is necessary, which is decided in response to uplink data signals, and so on. Also, the control section 301 controls the scheduling of synchronization signals (for example, the PSS (Primary Synchronization Signal)/SSS (Secondary Synchronization Signal)), downlink reference signals (for example, the CRS, the CSI-RS, the DM-RS, etc.) and so on.

In addition, the control section 301 controls the scheduling of uplink data signals (for example, signals transmitted in the PUSCH), uplink control signals (for example, signals transmitted in the PUCCH and/or the PUSCH), random access preambles transmitted in the PRACH, uplink reference signals and so on.

The control section 301 controls transmission and/or receipt of signals based on a first TTI (for example, a short TTI), and a second TTI (for example, a long TTI) having a longer TTI length than the first TTI. For example, the control section 301 may exert control so that short TTI data interrupts long TTI data transmission, and is transmitted.

The control section 301 may save the soft bits (for example, the result of decoding) of UL signals (UL data signals) that are received, and use the saved soft bits and retransmitted UL signals to control the decoding process. For example, if a UL signal that is transmitted in a short TTI (for example, short TTI data) is scheduled in a resource allocated to a UL signal that is transmitted in a long TTI (for example, long TTI data), the control section 301 may control the decoding process of the long TTI data without using the soft bit corresponding to the UL signal that is transmitted in the short TTI.

Among the soft bits that are saved, the control section 301 may configure the soft bit that corresponds to the UL signal that is transmitted in the short TTI as unknown (LLR=0). In addition, the control section 301 may exert control so that the soft bit corresponding to the UL signal transmitted in the short TTI is not saved.

When a UL signal is retransmitted, if a UL signal that is transmitted in a short TTI is scheduled in a resource that is allocated to a UL signal that is transmitted in a long TTI, the control section 301 may control the decoding process without using the soft bit in the retransmitted UL signal corresponding to the UL signal that is transmitted in the short TTI.

The transmission signal generation section 302 generates downlink signals (downlink control signals, downlink data signals, downlink reference signals and so on) based on commands from the control section 301, and outputs these signals to the mapping section 303. The transmission signal generation section 302 can be constituted by a signal generator, a signal generating circuit or signal generating apparatus that can be described based on general understanding of the technical field to which the present invention pertains.

For example, the transmission signal generation section 302 generates DL assignments, which report downlink signal allocation information, and UL grants, which report uplink signal allocation information, based on commands from the control section 301. Also, the downlink data signals are subjected to the coding process, the modulation process and so on, by using coding rates and modulation schemes that are determined based on, for example, channel state information (CSI) from each user terminal 20.

The mapping section 303 maps the downlink signals generated in the transmission signal generation section 302 to predetermined radio resources based on commands from the control section 301, and outputs these to the transmitting/receiving sections 103. The mapping section 303 can be constituted by a mapper, a mapping circuit or mapping apparatus that can be described based on general understanding of the technical field to which the present invention pertains.

The received signal processing section 304 performs receiving processes (for example, demapping, demodulation, decoding and so on) of received signals that are input from the transmitting/receiving sections 103. Here, the received signals include, for example, uplink signals transmitted from the user terminal 20 (uplink control signals, uplink data signals, uplink reference signals, etc.). For the received signal processing section 304, a signal processor, a signal processing circuit or signal processing apparatus that can be described based on general understanding of the technical field to which the present invention pertains can be used.

The received signal processing section 304 outputs the decoded information, acquired through the receiving processes, to the control section 301. For example, when a PUCCH to contain an HARQ-ACK is received, the received signal processing section 304 outputs this HARQ-ACK to the control section 301. Also, the received signal processing section 304 outputs the received signals and/or the signals after the receiving processes to the measurement section 305.

The measurement section 305 conducts measurements with respect to the received signal. The measurement section 305 can be constituted by a measurer, a measurement circuit or measurement apparatus that can be described based on general understanding of the technical field to which the present invention pertains.

When signals are received, the measurement section 305 may measure, for example, the received power (for example, RSRP (Reference Signal Received Power)), the received quality (for example, RSRQ (Reference Signal Received Quality)), SINR (Signal to Interference plus Noise Ratio) and/or the like), uplink channel information (for example, CSI) and so on. The measurement results may be output to the control section 301.

### (User Terminal)

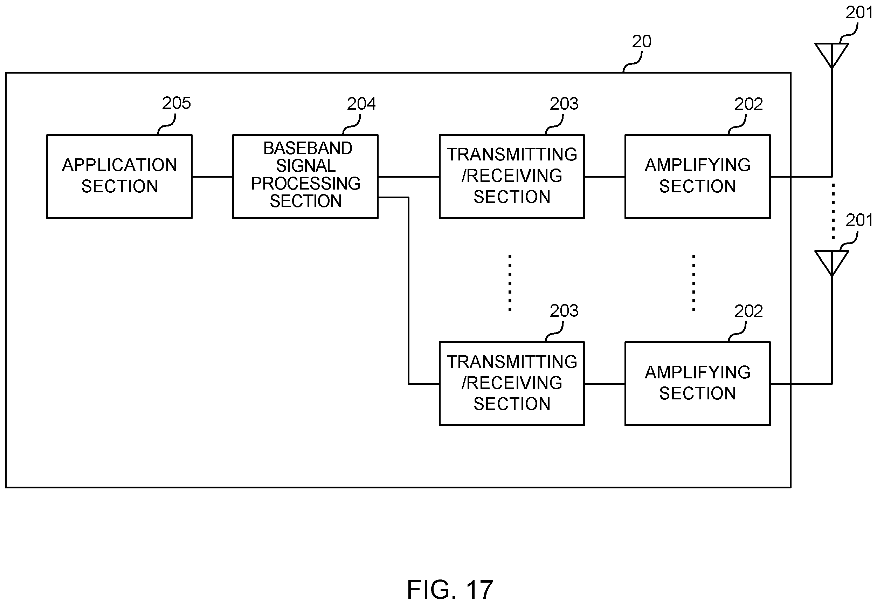

FIG. 17 is a diagram to show an exemplary overall structure of a user terminal according to one embodiment of the present invention. A user terminal 20 has a plurality of transmitting/receiving antennas 201, amplifying sections 202, transmitting/receiving sections 203, a baseband signal processing section 204 and an application section 205. Note that one or more transmitting/receiving antennas 201, amplifying sections 202 and transmitting/receiving sections 203 may be provided.

Radio frequency signals that are received in the transmitting/receiving antennas 201 are amplified in the amplifying sections 202. The transmitting/receiving sections 203 receive the downlink signals amplified in the amplifying sections 202. The received signals are subjected to frequency conversion and converted into the baseband signal in the transmitting/receiving sections 203, and output to the baseband signal processing section 204. A transmitting/receiving section 203 can be constituted by a transmitters/receiver, a transmitting/receiving circuit or transmitting/receiving apparatus that can be described based on general understanding of the technical field to which the present invention pertains. Note that a transmitting/receiving section 203 may be structured as a transmitting/receiving section in one entity, or may be constituted by a transmitting section and a receiving section.

The baseband signal processing section 204 performs, for the baseband signal that is input, an FFT process, error correction decoding, a retransmission control receiving process and so on. Downlink user data is forwarded to the application section 205. The application section 205 performs processes related to higher layers above the physical layer and the MAC layer, and so on. Also, in the downlink data, the broadcast information can be also forwarded to the application section 205.

Meanwhile, uplink user data is input from the application section 205 to the baseband signal processing section 204. The baseband signal processing section 204 performs a retransmission control transmission process (for example, an HARQ transmission process), channel coding, precoding, a discrete Fourier transform (DFT) process, an IFFT process and so on, and the result is forwarded to the transmitting/receiving sections 203. Baseband signals that are output from the baseband signal processing section 204 are converted into a radio frequency band in the transmitting/receiving sections 203 and transmitted. The radio frequency signals that are subjected to frequency conversion in the transmitting/receiving sections 203 are amplified in the amplifying sections 202, and transmitted from the transmitting/receiving antennas 201.

The transmitting/receiving sections 203 may, in a given carrier (cell, CC), transmit and/or receive signals in a second TTI (for example, a long TTI), which has a longer TTI length than a first TTI (for example, a short TTI). In addition, the transmitting/receiving sections 203 may receive, from the radio base station 10, DCI (puncturing DCI) that specifies resources that are punctured by short TTI data among resources allocated to long TTI data.

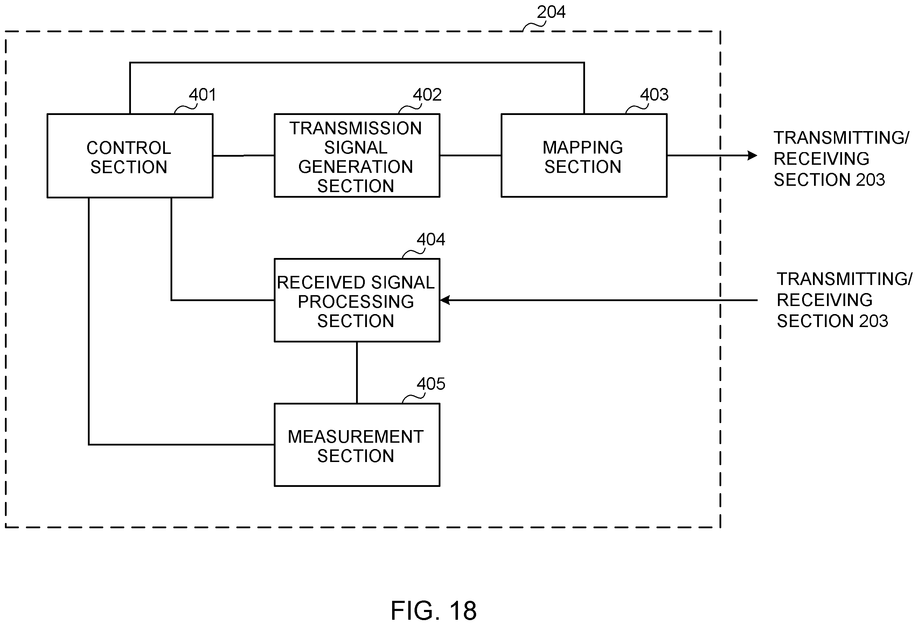

FIG. 18 is a diagram to show an exemplary functional structure of a user terminal according to one embodiment of the present invention. Note that, although this example primarily shows functional blocks that pertain to characteristic parts of the present embodiment, the user terminal 20 has other functional blocks that are necessary for radio communication as well.

The baseband signal processing section 204 provided in the user terminal 20 at least has a control section 401, a transmission signal generation section 402, a mapping section 403, a received signal processing section 404 and a measurement section 405. Note that these configurations have only to be included in the user terminal 20, and some or all of these configurations may not be included in the baseband signal processing section 204.

The control section 401 controls the whole of the user terminal 20. For the control section 401, a controller, a control circuit or control apparatus that can be described based on general understanding of the technical field to which the present invention pertains can be used.

The control section 401, for example, controls the generation of signals in the transmission signal generation section 402, the allocation of signals by the mapping section 403, and so on. Furthermore, the control section 401 controls the signal receiving processes in the received signal processing section 404, the measurements of signals in the measurement section 405, and so on.

The control section 401 acquires downlink control signals (signals transmitted in the PDCCH/EPDCCH) and downlink data signals (for example, signals transmitted in the PDSCH) transmitted from the radio base station 10, from the received signal processing section 404. The control section 401 controls the generation of uplink control signals (for example, delivery acknowledgement information and so on) and/or uplink data signals based on whether or not retransmission control is necessary, which is decided in response to downlink control signals and/or downlink data signals, and so on.

The control section 401 controls transmission and/or receipt of signals based on a first TTI (for example, a short TTI) and a second TTI (for example, a long TTI) having a longer TTI length than the first TTI.

The control section 401 saves the soft bits (for example, the result of decoding) of DL signals (DL data signals) that are received, and use the saved soft bits and retransmitted DL signals to control the decoding process. For example, if a DL signal that is transmitted in a short TTI (for example, short TTI data) is scheduled in a resource allocated to a DL signal that is transmitted in a long TTI (for example, long TTI data), the control section 401 may control the decoding process of the long TTI data without using the soft bit corresponding to the DL signal that is transmitted in the short TTI.

Among the soft bits that are saved, the control section 401 may configure the soft bit that corresponds to the DL signal that is transmitted in the short TTI as unknown (the LLR of the corresponding soft bit may be regarded as 0, or may be set to 0 at the time of decoding). In addition, the control section 401 may exert control so that the soft bit corresponding to the DL signal transmitted in the short TTI is not saved.

When a DL signal is retransmitted, if a DL signal that is transmitted in a short TTI is scheduled in a resource that is allocated to a DL signal that is transmitted in a long TTI, the control section 401 may control the decoding process without using the soft bit in the retransmitted DL signal corresponding to the DL signal that is transmitted in the short TTI.

When acquiring puncturing DCI from the received signal processing section 404, the control section 401 may assume that short TTI data for another UE is transmitted in the resource specified by the DCI.

For example, taking into account the puncturing DCI (downlink puncturing DCI), the control section 401 may configure predetermined soft bits of long TTI data as unknown, or may control these bits no to be saved. The control section 401 may exert control so that long TTI data that is transmitted in the UL is not mapped (not punctured and transmitted) to resources specified by puncturing DCI (uplink puncturing DCI).

In addition, when various pieces of information reported from the radio base station 10 are acquired from the received signal processing section 404, the control section 401 may update the parameters used for control based on the information.

The transmission signal generation section 402 generates uplink signals (uplink control signals, uplink data signals, uplink reference signals, etc.) based on commands from the control section 401, and outputs these signals to the mapping section 403. The transmission signal generation section 402 can be constituted by a signal generator, a signal generating circuit or signal generating apparatus that can be described based on general understanding of the technical field to which the present invention pertains.

For example, the transmission signal generation section 402 generates uplink control signals related to delivery acknowledgement information, channel state information (CSI) and so on, based on commands from the control section 401. Also, the transmission signal generation section 402 generates uplink data signals based on commands from the control section 401. For example, when a UL grant is included in a downlink control signal that is reported from the radio base station 10, the control section 401 commands the transmission signal generation section 402 to generate an uplink data signal.

The mapping section 403 maps the uplink signals generated in the transmission signal generation section 402 to radio resources based on commands from the control section 401, and outputs the result to the transmitting/receiving sections 203. The mapping section 403 can be constituted by a mapper, a mapping circuit or mapping apparatus that can be described based on general understanding of the technical field to which the present invention pertains.

The received signal processing section 404 performs receiving processes (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the radio base station 10. The received signal processing section 404 can be constituted by a signal processor, a signal processing circuit or signal processing apparatus that can be described based on general understanding of the technical field to which the present invention pertains. Also, the received signal processing section 404 can constitute the receiving section according to the present invention.

The received signal processing section 404 outputs the decoded information, acquired through the receiving processes, to the control section 401. The received signal processing section 404 outputs, for example, broadcast information, system information, RRC signaling, DCI and so on, to the control section 401. Also, the received signal processing section 404 outputs the received signals and/or the signals after the receiving processes to the measurement section 405.

The measurement section 405 conducts measurements with respect to the received signals. For example, the measurement section 405 performs measurements using downlink reference signals transmitted from the radio base station 10. The measurement section 405 can be constituted by a measurer, a measurement circuit or measurement apparatus that can be described based on general understanding of the technical field to which the present invention pertains.

The measurement section 405 may measure, for example, the received power (for example, RSRP), the received quality (for example, RSRQ, received SINR), down link channel information (for example, CSI) and so on of the received signals. The measurement results may be output to the control section 401.

### (Hardware Structure)

Note that the block diagrams that have been used to describe the above embodiments show blocks in functional units. These functional blocks (components) may be implemented in arbitrary combinations of hardware and/or software. Also, the means for implementing each functional block is not particularly limited. That is, each functional block may be realized by one piece of apparatus that is physically and/or logically aggregated, or may be realized by directly and/or indirectly connecting two or more physically and/or logically separate pieces of apparatus (via wire and/or wireless, for example) and using these multiple pieces of apparatus.

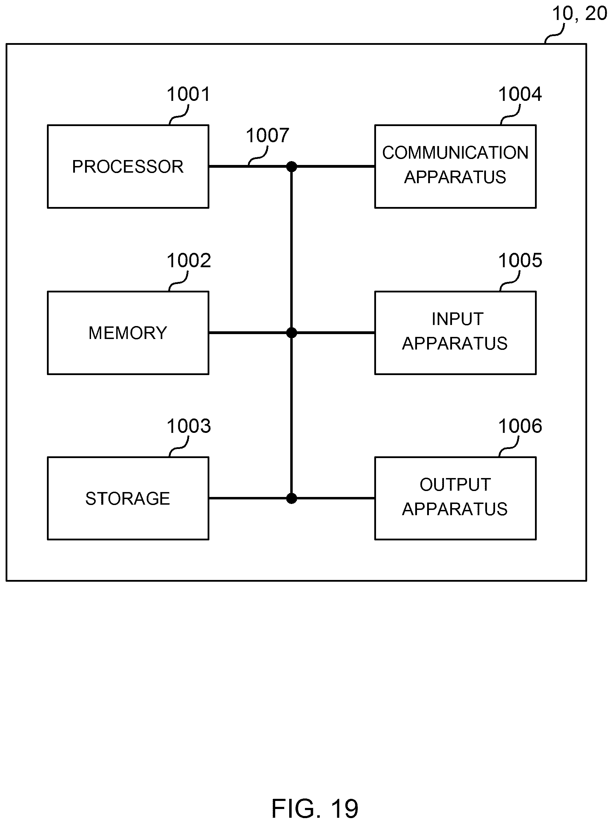

For example, the radio base station, user terminals and so on according to one embodiment of the present invention may function as a computer that executes the processes of the radio communication method of the present invention. FIG. 19 is a diagram to show an exemplary hardware structure of a radio base station and a user terminal according to one embodiment of the present invention. Physically, the above-described radio base stations 10 and user terminals 20 may be formed as a computer apparatus that includes a processor 1001, a memory 1002, a storage 1003, communication apparatus 1004, input apparatus 1005, output apparatus 1006 and a bus 1007.

Note that, in the following description, the word "apparatus" may be replaced by "circuit," "device," "unit" and so on. Note that the hardware structure of a radio base station 10 and a user terminal 20 may be designed to include one or more of each apparatus shown in the drawings, or may be designed not to include part of the apparatus.

For example, although only one processor 1001 is shown, a plurality of processors may be provided. Furthermore, processes may be implemented with one processor, or processes may be implemented in sequence, or in different manners, on one or more processors. Note that the processor 1001 may be implemented with one or more chips.

Each function of the radio base station 10 and the user terminal 20 is implemented by reading predetermined software (program) on hardware such as the processor 1001 and the memory 1002, and by controlling the calculations in the processor 1001, the communication in the communication apparatus 1004, and the reading and/or writing of data in the memory 1002 and the storage 1003.

The processor 1001 may control the whole computer by, for example, running an operating system. The processor 1001 may be configured with a central processing unit (CPU), which includes interfaces with peripheral apparatus, control apparatus, computing apparatus, a register and so on. For example, the above-described baseband signal processing section 104 (204), call processing section 105 and so on may be implemented by the processor 1001.

Furthermore, the processor 1001 reads programs (program codes), software modules, data and so forth from the storage 1003 and/or the communication apparatus 1004, into the memory 1002, and executes various processes according to these. As for the programs, programs to allow computers to execute at least part of the operations of the above-described embodiments may be used. For example, the control section 401 of the user terminals 20 may be implemented by control programs that are stored in the memory 1002 and that operate on the processor 1001, and other functional blocks may be implemented likewise.

The memory 1002 is a computer-readable recording medium, and may be constituted by, for example, at least one of a ROM (Read Only Memory), an EPROM (Erasable Programmable ROM), an EEPROM (Electrically EPROM), a RAM (Random Access Memory) and/or other appropriate storage media. The memory 1002 may be referred to as a "register," a "cache," a "main memory" (primary storage apparatus) and so on. The memory 1002 can store executable programs (program codes), software modules and so on for implementing the radio communication methods according to embodiments of the present invention.

The storage 1003 is a computer-readable recording medium, and may be constituted by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, a key drive, etc.), a magnetic stripe, a database, a server, and/or other appropriate storage media. The storage 1003 may be referred to as "secondary storage apparatus."

The communication apparatus 1004 is hardware (transmitting/receiving apparatus) for allowing inter-computer communication by using wired and/or wireless networks, and may be referred to as, for example, a "network device," a "network controller," a "network card," a "communication module" and so on. The communication apparatus 1004 may be configured to include a high frequency switch, a duplexer, a filter, a frequency synthesizer and so on in order to realize, for example, frequency division duplex (FDD) and/or time division duplex (TDD). For example, the above-described transmitting/receiving antennas 101 (201), amplifying sections 102 (202), transmitting/receiving sections 103 (203), communication path interface 106 and so on may be implemented by the communication apparatus 1004.

The input apparatus 1005 is an input device for receiving input from the outside (for example, a keyboard, a mouse, a microphone, a switch, a button, a sensor and so on). The output apparatus 1006 is an output device for allowing sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these pieces of apparatus, including the processor 1001, the memory 1002 and so on are connected by the bus 1007 so as to communicate information. The bus 1007 may be formed with a single bus, or may be formed with buses that vary between pieces of apparatus.

Also, the radio base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology used in this specification and the terminology that is needed to understand this specification may be replaced by other terms that convey the same or similar meanings. For example, "channels" and/or "symbols" may be replaced by "signals (or "signaling")." Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

Furthermore, a radio frame may be comprised of one or more periods (frames) in the time domain. Each of one or more periods (frames) constituting a radio frame may be referred to as a "subframe." Furthermore, a subframe may be comprised of one or more slots in the time domain. Furthermore, a slot may be comprised of one or more symbols in the time domain (OFDM (Orthogonal Frequency Division Multiplexing) symbols, SC-FDMA (Single Carrier Frequency Division Multiple Access) symbols, and so on).

A radio frame, a subframe, a slot and a symbol all represent the time unit in signal communication. A radio frame, a subframe, a slot and a symbol may be each called by other applicable names. For example, one subframe may be referred to as a "transmission time interval (TTI)," or a plurality of consecutive subframes may be referred to as a "TTI," and one slot may be referred to as a "TTI." That is, a subframe and/or a TTI may be a subframe (1 ms) in existing LTE, may be a shorter period than 1 ms (for example, one to thirteen symbols), or may be a longer period of time than 1 ms. Note that the unit to represent a TTI may be referred to as a "slot," a "mini slot" and so on, instead of a "subframe.

Here, a TTI refers to the minimum time unit of scheduling in radio communication, for example. For example, in LTE systems, a radio base station schedules the radio resources (such as the frequency bandwidth and transmission power that can be used in each user terminal) to allocate to each user terminal in TTI units. Note that the definition of TTIs is not limited to this. TTIs may be the time unit for transmitting channel-encoded data packets (transport blocks), or may be the unit of processing in scheduling, link adaptation and so on.

A TTI having a time duration of 1 ms may be referred to as a "normal TTI" (TTI in LTE Rel. 8 to 12), a "long TTI," a "normal subframe," a "long subframe," and so on. A TTI that is shorter than a normal TTI may be referred to as a "shortened TTI," a "short TTI," a "shortened subframe," a "short subframe," and so on.

Note that a long TTI (for example, a normal TTI, a subframe, etc.) may be replaced with a TTI having a time duration exceeding 1 ms, and a short TTI (for example, a shortened TTI) may be replaced with a TTI having a TTI length less than the TTI length of a long TTI and not less than 1 ms.

A resource block (RB) is the unit of resource allocation in the time domain and the frequency domain, and may include one or a plurality of consecutive subcarriers in the frequency domain. Also, an RB may include one or more symbols in the time domain, and may be one slot, one subframe or one TTI in length. One TTI and one subframe each may be comprised of one or more resource blocks. Note that an RB may be referred to as a "physical resource block (PRB (Physical RB))," a "PRB pair," an "RB pair," and so on.

Furthermore, a resource block may be comprised of one or more resource elements (REs). For example, one RE may be a radio resource field of one subcarrier and one symbol.

Note that the above-described structures of radio frames, subframes, slots, symbols and so on are simply examples. For example, configurations such as the number of subframes included in a radio frame, the number of slots included in a subframe, the number of symbols and RBs included in a slot, the number of subcarriers included in an RB, the number of symbols in a TTI, the symbol duration and the cyclic prefix (CP) duration can be variously changed.

Also, the information and parameters described in this specification may be represented in absolute values or in relative values with respect to predetermined values, or may be represented in other information formats. For example, radio resources may be specified by predetermined indices. In addition, equations to use these parameters and so on may be used, apart from those explicitly disclosed in this specification.

The names used for parameters and so on in this specification are in no respect limiting. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and/or others described in this specification may be represented by using a variety of different technologies. For example, data, instructions, commands, information, signals, bits, symbols and chips, all of which may be referenced throughout the herein-contained description, may be represented by voltages, currents, electromagnetic waves, magnetic fields or particles, optical fields or photons, or any combination of these.

Also, information, signals and so on can be output from higher layers to lower layers and/or from lower layers to higher layers. Information, signals and so on may be input and/or output via a plurality of network nodes.

The information, signals and so on that are input and/or output may be stored in a specific location (for example, a memory), or may be managed using a management table. The information, signals and so on to be input and/or output can be overwritten, updated or appended. The information, signals and so on that are output may be deleted. The information, signals and so on that are input may be transmitted to other pieces of apparatus.

Reporting of information is by no means limited to the aspects/embodiments described in this specification, and other methods may be used as well. For example, reporting of information may be implemented by using physical layer signaling (for example, downlink control information (DCI), uplink control information (UCI)), higher layer signaling (for example, RRC (Radio Resource Control) signaling, broadcast information (the master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup message, RRC connection reconfiguration message, and so on. Also, MAC signaling may be reported using, for example, MAC control elements (MAC CEs (Control Elements)).

Also, reporting of predetermined information (for example, reporting of information to the effect that "X holds") does not necessarily have to be sent explicitly, and can be sent implicitly (by, for example, not reporting this piece of information, or by reporting a different piece of information).

Decisions may be made in values represented by one bit (0 or 1), may be made in Boolean values that represent true or false, or may be made by comparing numerical values (for example, comparison against a predetermined value).

Software, whether referred to as "software," "firmware," "middleware," "microcode" or "hardware description language," or called by other names, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, commands, information and so on may be transmitted and received via communication media. For example, when software is transmitted from a website, a server or other remote sources by using wired technologies (coaxial cables, optical fiber cables, twisted-pair cables, digital subscriber lines (DSL) and so on) and/or wireless technologies (infrared radiation, microwaves and so on), these wired technologies and/or wireless technologies are also included in the definition of communication media.

The terms "system" and "network" as used herein are used interchangeably.

As used herein, the terms "base station (BS)," "radio base station," "eNB," "cell," "sector," "cell group," "carrier," and "component carrier" may be used interchangeably. A base station may be referred to as a "fixed station," "NodeB," "eNodeB (eNB)," "access point," "transmission point," "receiving point," "femto cell," "small cell" and so on.

A base station can accommodate one or more (for example, three) cells (also referred to as "sectors"). When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part or all of the coverage area of a base station and/or a base station subsystem that provides communication services within this coverage.

As used herein, the terms "mobile station (MS)" "user terminal," "user equipment (UE)" and "terminal" may be used interchangeably. A base station may be referred to as a "fixed station," "NodeB," "eNodeB (eNB)," "access point," "transmission point," "receiving point," "femto cell," "small cell" and so on.

A mobile station may be referred to, by a person skilled in the art, as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client" or some other suitable terms.

Furthermore, the radio base stations in this specification may be interpreted as user terminals. For example, each aspect/embodiment of the present invention may be applied to a configuration in which communication between a radio base station and a user terminal is replaced with communication among a plurality of user terminals (D2D (Device-to-Device)). In this case, user terminals 20 may have the functions of the radio base stations 10 described above. In addition, terms such as "uplink" and "downlink" may be interpreted as "side." For example, an uplink channel may be interpreted as a side channel.

Likewise, the user terminals in this specification may be interpreted as radio base stations. In this case, the radio base stations 10 may have the functions of the user terminals 20 described above.

Certain actions which have been described in this specification to be performed by base stations may, in some cases, be performed by higher nodes (upper nodes). In a network comprised of one or more network nodes with base stations, it is clear that various operations that are performed to communicate with terminals can be performed by base stations, one or more network nodes (for example, MMEs (Mobility Management Entities), S-GW (Serving-Gateways), and so on may be possible, but these are not limiting) other than base stations, or combinations of these.

The aspects/embodiments illustrated in this specification may be used individually or in combinations, which may be switched depending on the mode of implementation. The order of processes, sequences, flowcharts and so on that have been used to describe the aspects/embodiments herein may be re-ordered as long as inconsistencies do not arise. For example, although various methods have been illustrated in this specification with various components of steps in exemplary orders, the specific orders that are illustrated herein are by no means limiting.

The aspects/embodiments illustrated in this specification may be applied to systems that use LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark) and other adequate radio communication methods, and/or next-generation systems that are enhanced based on these.

The phrase "based on" as used in this specification does not mean "based only on," unless otherwise specified. In other words, the phrase "based on" means both "based only on" and "based at least on."

Reference to elements with designations such as "first," "second" and so on as used herein does not generally limit the number/quantity or order of these elements. These designations are used only for convenience, as a method of distinguishing between two or more elements. In this way, reference to the first and second elements does not imply that only two elements may be employed, or that the first element must precede the second element in some way.

The terms "judge" and "determine" as used herein may encompass a wide variety of actions. For example, to "judge" and "determine" as used herein may be interpreted to mean making judgements and determinations related to calculating, computing, processing, deriving, investigating, looking up (for example, searching a table, a database or some other data structure), ascertaining and so on. Furthermore, to "judge" and "determine" as used herein may be interpreted to mean making judgements and determinations related to receiving (for example, receiving information), transmitting (for example, transmitting information), inputting, outputting, accessing (for example, accessing data in a memory) and so on. In addition, to "judge" and "determine" as used herein may be interpreted to mean making judgements and determinations related to resolving, selecting, choosing, establishing, comparing and so on. In other words, to "judge" and "determine" as used herein may be interpreted to mean making judgements and determinations related to some action.

As used herein, the terms "connected" and "coupled," or any variation of these terms, mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access." As used herein, two elements may be considered "connected" or "coupled" to each other by using one or more electrical wires, cables and/or printed electrical connections, and, as a number of non-limiting and non-inclusive examples, by using electromagnetic energy, such as electromagnetic energy having wavelengths in radio frequency fields, microwave regions and optical (both visible and invisible) regions.

When terms such as "include," "comprise" and variations of these are used in this specification or in claims, these terms are intended to be inclusive, in a manner similar to the way the term "provide" is used. Furthermore, the term "or" as used in this specification or in claims is intended to be not an exclusive disjunction.

Now, although the present invention has been described in detail above, it should be obvious to a person skilled in the art that the present invention is by no means limited to the embodiments described herein. The present invention can be implemented with various corrections and in various modifications, without departing from the spirit and scope of the present invention defined by the recitations of claims. Consequently, the description herein is provided only for the purpose of explaining examples, and should by no means be construed to limit the present invention in any way.

The disclosure of Japanese Patent Application No.2016-182134, filed on September 16, 2016, including the specification, drawings and abstract, is incorporated herein by reference in its entirety.

## Claims

1. A user terminal comprising:
a receiving section that receives a DL signal in a second transmission time interval (TTI) having a longer TTI length than a first TTI; and
a control section that saves soft bits of the received DL signal, and controls a decoding process using the saved soft bits and a retransmitted DL signal,
wherein, when a DL signal that is transmitted in the first TTI is scheduled in a resource allocated to the DL signal transmitted in the second TTI, the control section controls the decoding process without using a soft bit corresponding to the DL signal that is transmitted in the first TTI.

2. The user terminal according to claim 1, wherein, amongst the soft bits that are saved, the control section configures the soft bit corresponding to the DL signal that is transmitted in the first TTI as unknown, and controls the decoding process.

3. The user terminal according to claim 1, wherein the control section exerts control not to save the soft bit corresponding to the DL signal that is transmitted in the first TTI.

4. The user terminal according to any one of claims 1 to 3, wherein, when the DL signal transmitted in the first TTI is scheduled in a resource allocated to the DL signal transmitted in the second TTI in the retransmitted DL signal, the control section controls the decoding process without using the soft bit corresponding to the DL signal that is transmitted in the first TTI, in the retransmitted DL signal.

5. The user terminal according to any one of claims 1 to 4, wherein the receiving section receives downlink control information indicating a resource that is punctured by the DL signal transmitted in the first TTI within the resource allocated to the DL signal transmitted in the second TTI.

6. A radio communication method for a user terminal that communicates with a radio base station, the radio communication method comprising:
receiving a DL signal in a second transmission time interval (TTI) having a longer TTI length than a first TTI; and
saving soft bits of the received DL signal, and controlling a decoding process using the saved soft bits and a retransmitted DL signal,
wherein, in the control step, when a DL signal that is transmitted in the first TTI is scheduled in a resource allocated to the DL signal transmitted in the second TTI, the decoding process is controlled without using a soft bit corresponding to the DL signal that is transmitted in the first TTI.
